# EUROPEAN PATENT APPLICATION

(11) **EP 4 607 538 A1**
(43) Date of publication of application: **27.08.2025**
(21) Application number: 24159655.0
(22) Date of filing: 26.02.2024
(51) Int. Cl.: G21K 1/00, G06N 10/40

(54) **ION TRAP DEVICE INCLUDING A SUBSTRATE WITH AN OPENING FOR ELECTRICAL COUPLING ELEMENTS**

(71) Applicant: Infineon Technologies Austria AG, 9500 Villach (AT)
(72) Inventor: ZESAR, Alexander, 9500 Villach (AT); DIETL, Matthias German, 9500 Villach (AT); AUCHTER, Silke Katharina, 9500 Villach (AT); RÖSSLER, Clemens, 9500 Villach (AT); KÖNIG, Lothar, 93164 Laaber (DE)
(74) Representative: Lambsdorff & Lange Patentanwälte Partnerschaft mbB

(57) **Abstract**

A device (100) for controlling trapped ions includes a carrier (2) including a mounting surface (4). The device further includes a substrate (6) including a top surface (8), a bottom surface (10) and at least one opening (12) extending through the substrate from the top surface to the bottom surface, wherein the bottom surface of the substrate is arranged on the mounting surface of the carrier. The device further includes a structured electrode layer (14) arranged on the top surface of the substrate, wherein the structured electrode layer forms a plurality of electrodes (16) of an ion trap configured to trap ions in a zone above the structured electrode layer. The device further includes a plurality of electrical coupling elements (18) extending through the at least one opening of the substrate, wherein the electrical coupling elements electrically couple the electrodes of the ion trap with a plurality of first electrical contacts (20) arranged on the mounting surface of the carrier.

## Description

### Technical Field

The present disclosure generally relates to devices for controlling trapped ions (ion trap devices). More particular, the present disclosure relates to ion trap devices including a substrate having an opening for electrical coupling elements.

### Background

Devices for controlling trapped ions may include a structured electrode layer arranged on a substrate. The structured electrode layer may include a plurality of electrodes for generating electrical fields for trapping ions above the structured electrode layer. In some examples, an electrical connection between the electrodes arranged on the substrate and a printed circuit board located beneath the substrate may be provided by Through Silicon Vias (TSVs).

Manufacturers and developers of devices for controlling trapped ions are constantly striving to improve their products. In this regard, it may be desirable to improve and simplify an electrical access to the electrodes of the ion trap device. Furthermore, it may be beneficial to develop solutions supporting a straightforward and easy scaling of ion trap devices to larger sizes in order to increase the number of trapped ions.

### Summary

An aspect of the present disclosure relates to a device for controlling trapped ions. The device comprises a carrier comprising a mounting surface. The device further comprises a substrate comprising a top surface, a bottom surface and at least one opening extending through the substrate from the top surface to the bottom surface, wherein the bottom surface of the substrate is arranged on the mounting surface of the carrier. The device further comprises a structured electrode layer arranged on the top surface of the substrate, wherein the structured electrode layer forms a plurality of electrodes of an ion trap configured to trap ions in a zone above the structured electrode layer. The device further comprises a plurality of electrical coupling elements extending through the at least one opening of the substrate, wherein the electrical coupling elements electrically couple the electrodes of the ion trap with a plurality of first electrical contacts arranged on the mounting surface of the carrier.

A further aspect of the present disclosure relates to a method for manufacturing a device for controlling trapped ions. The method comprises an act of providing a substrate comprising a top surface and a bottom surface. The method further comprises an act of forming at least one opening extending through the substrate from the top surface to the bottom surface. The method further comprises an act of forming a structured electrode layer on the top surface of the substrate, wherein the structured electrode layer comprises a plurality of electrodes of an ion trap configured to trap ions in a zone above the structured electrode layer. The method further comprises an act of arranging the bottom surface of the substrate on a mounting surface of a carrier. The method further comprises an act of manufacturing a plurality of electrical coupling elements extending through the at least one opening of the substrate, wherein the electrical coupling elements electrically couple the electrodes of the ion trap with a plurality of first electrical contacts arranged on the mounting surface of the carrier.

A further aspect of the present disclosure relates to a device. The device comprises a carrier comprising a mounting surface. The device further comprises a semiconductor chip comprising a top surface, a bottom surface and an opening extending through the semiconductor chip from the top surface to the bottom surface, wherein the bottom surface of the semiconductor chip is arranged on the mounting surface of the carrier. The device further comprises an electrical contact arranged on the top surface of the semiconductor chip. The device further comprises an electrical coupling element extending through the opening of the semiconductor chip and electrically coupling the electrical contact of the semiconductor chip with an electrical contact arranged on the mounting surface of the carrier.

### Brief Description of the Drawings

Devices and methods in accordance with the disclosure are described in more detail below based on the drawings. Similar reference numerals may designate corresponding similar parts. The technical features of the various illustrated examples may be combined unless they exclude each other and/or can be selectively omitted if not described to be necessarily required.
Figure 1 schematically illustrates a top view of a device 100 for controlling trapped ions in accordance with the disclosure.
Figure 2 schematically illustrates a top view of a detail of a device 200 for controlling trapped ions in accordance with the disclosure.
Figure 3 includes Figures 3A and 3B schematically illustrating a cross-sectional side view of a device 300 for controlling trapped ions in accordance with the disclosure and a detail thereof.
Figure 4 schematically illustrates a top view of a device 400 for controlling trapped ions in accordance with the disclosure.
Figure 5 schematically illustrates a top view of a device 500 for controlling trapped ions in accordance with the disclosure.
Figure 6 schematically illustrates a top view of a device 600 for controlling trapped ions in accordance with the disclosure.
Figure 7 schematically illustrates a top view of a device 700 for controlling trapped ions in accordance with the disclosure.
Figure 8 schematically illustrates a top view of a device 800 for controlling trapped ions in accordance with the disclosure.
Figure 9 schematically illustrates a top view of a device 900 for controlling trapped ions in accordance with the disclosure.
Figure 10 schematically illustrates a top view of a device 1000 for controlling trapped ions in accordance with the disclosure.
Figure 11 illustrates a flowchart of a method for manufacturing a device for controlling trapped ions in accordance with the disclosure.
Figure 12 schematically illustrates a cross-sectional side view of a device 1200 in accordance with the disclosure.

### Detailed Description

The following description relates to devices for controlling trapped ions (ion trap devices). The described ion trap devices may be configured to trap ions and control the trapped ions. It is to be understood that the following description is not restricted to ions, but may also be applied to atoms, molecules or other quantum particles/systems (e.g. electrons or defect centers). In particular, the trapped ions may be physically grouped in ion chains, wherein an ion chain may include one or multiple ions.

In some examples, the ion trap devices described herein may be used for quantum computing. Trapped ions are one of the most promising candidates for being used as qubits in quantum computers, since they can be trapped with long lifetimes using electromagnetic fields. In this context, each ion may represent a physical qubit. However, ion trap devices in accordance with the disclosure are not limited to the application of quantum computing. The ion trap devices presented herein may also be used for other applications, such as atomic clocks.

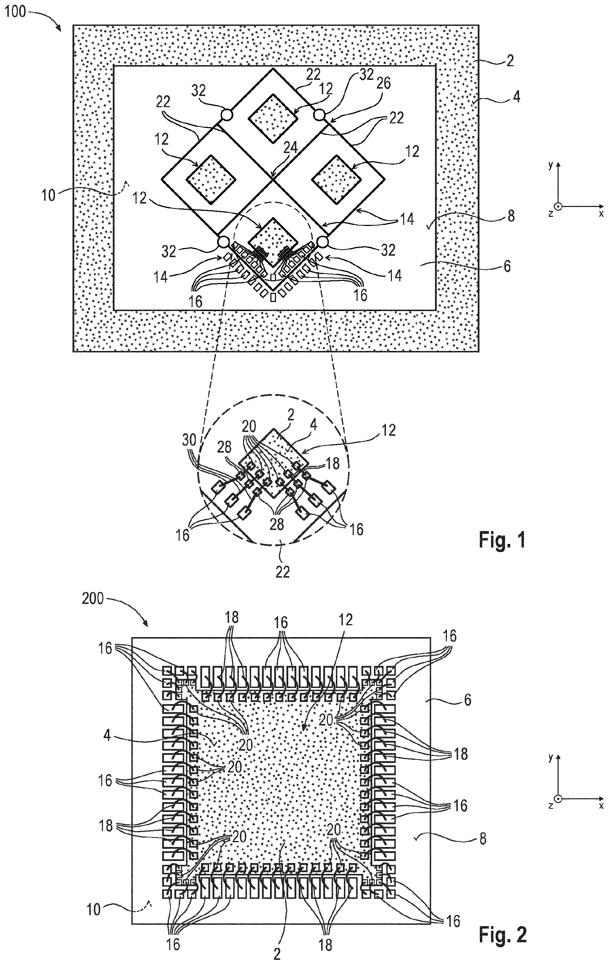

Referring now to Figure 1, a top view of a device 100 for controlling trapped ions is illustrated. The device 100 may include a carrier 2 having a mounting surface 4 and a substrate 6 having a top surface 8 and a bottom surface 10. The bottom surface 10 of the substrate 6 may be arranged on the mounting surface 4 of the carrier 2. The substrate 6 may include at least one opening 12 extending through the substrate 6 from the top surface 8 to the bottom surface 10. The device 100 may further include a structured electrode layer 14 arranged on the top surface 8 of the substrate 6. The structured electrode layer 14 may form a plurality of electrodes 16 of an ion trap configured to trap ions in a zone above the structured electrode layer 14. Furthermore, the device 100 may include a plurality of electrical coupling elements 18 extending through the at least one opening 12 of the substrate 6. The electrical coupling elements 18 may electrically couple the electrodes 16 of the ion trap with a plurality of first electrical contacts 20 arranged on the mounting surface 4 of the carrier 2.

The electrode layer 14 may be structured to form one or a plurality of Paul traps, Penning traps or other type of ion traps. Ions trapped in a zone above the structured electrode layer 14 may be shuttled (or transported) along shuttling paths 22 of the device 100. The shuttling paths 22 may include straight sequences. In some examples, the shuttling paths 22 may also include junctions, such as X-junctions 24 and/or T-junctions 26. In particular, the shuttling paths 22 may extend above the structured electrode layer 14 including the plurality of electrodes 16. A shuttling path 22 may be arranged in a plane over the structured electrode layer 14, i.e. the trapped and/or shuttled ions may be spaced apart from the structured electrode layer 14 in the z-direction.

Time-dependent electric fields may be used for shuttling the ions along the shuttling paths 22. A shuttling of ions may be controlled by electric voltages applied to the electrodes 16 of the structured electrode layer 14. In particular, the ions may be moved along the shuttling paths 22 by means of AC and DC voltages that may be separately coupled to specific electrodes of the structured electrode layer 14. In this regard, the structured electrode layer 14 may include RF electrodes for RF trapping. The RF electrodes may extend parallel to the shuttling paths 22 and are not shown in the illustrated example for the sake of simplicity. In addition, the structured electrode layer 14 may include DC electrodes for static electric-field trapping and/or for moving the ions within the ion trap. In the illustrated example, the electrodes 16 are shown as a plurality of DC electrodes arranged along and on both sides of a shuttling path 22 of the device 100. It is to be noted that for illustrative purposes only some of the DC electrodes 16 are displayed. However, the device 100 may include additional DC electrodes arranged along all other shuttling paths 22. The trapped ions may be individually addressable and movable by appropriately controlling the electric potentials of the electrodes.

The structured electrode layer 14 and the electrodes 16 formed therein may be made of copper and/or gold. In a non-limiting example, the structured electrode layer 14 may be based on a five-wire geometry in which two RF electrodes may extend along the shuttling paths 22. In addition, a center DC electrode may be arranged between the RF electrodes and may extend parallel to them. Furthermore, a first plurality of first DC electrodes may be arranged adjacent to the first RF electrode and a second plurality of second DC electrodes 6B may be arranged adjacent to the second RF electrode. It is however to be understood that aspects described herein are not restricted to five-wire geometries, but may also hold true for other types of ion traps and/or electrode geometries.

Furthermore, ion trap devices as described herein may correspond to or may include a surface ion trap (or surface-electrode ion trap). In surface ion traps, all electrodes (i.e. the DC electrodes and the RF electrodes) may be arranged in a same single plane. The ions may be stored and shuttled above this single plane. However, it is to be understood that the concepts described herein are not restricted to surface ion traps. In further examples, devices for controlling trapped ions in accordance with the disclosure may also be based on three-dimensional ion trap geometries.

The device 100 may include a plurality of second electrical contacts 28 that may be arranged on the top surface 8 of the substrate 6, in particular at an edge of the respective opening 12. The second electrical contacts 28 may be electrically coupled to the electrodes 16 (in particular to the DC electrodes) of the ion trap via electrical connection elements 30. In one example, the second electrical contacts 28 and the electrical connection elements 30 may be formed in a same metal layer as the structured electrode layer 14 of the ion trap.

The electrical coupling elements 18 may be configured to electrically couple the second electrical contacts 28 arranged on the top surface 8 of the substrate 6 with the first electrical contacts 20 arranged on the mounting surface 4 of the carrier 2. For example, the electrical coupling elements 18 may include or may correspond to at least one of a wire or a ribbon. In a non-limiting example, the first and second electrical contacts 20 and 28 may be wire bond pads and the electrical coupling elements 18 may be wires. In the illustrated example, an electrical connection between the electrodes 16 of the ion trap and the first electrical contacts 20 on the mounting surface 4 of the carrier 2 may be established via the electrical coupling elements 18, the second electrical contacts 28 and the electrical connection elements 30, wherein the second electrical contacts 28 and the electrical connection elements 30 may be regarded as optional intervening elements. However, it is to be understood that in further examples, the electrodes 16 and the first electrical contacts 20 may be directly connected via the electrical coupling elements 18.

In practice, the number of first electrical contacts 20 arranged on the mounting surface 4 and/or the number of electrical coupling elements 18 connected thereto may be up to dozens or a few hundreds. An in-chip wirebonding as shown in the illustrated example may facilitate an electrical routing of the ion trap and may represent an alternative to conventional electrical connection elements, such as Through Silicon Vias (TSVs). In particular, an in-chip wirebonding through the openings 12 formed in the substrate 6 may support a scaling of the ion trap device 100 to larger sizes compared to e.g. solutions only including electrical contacts arranged at a periphery of the substrate 6.

The carrier 2 is not restricted to a specific type and may depend on the considered application. In one example, the carrier 2 may include or may correspond to a chip, a semiconductor chip or an integrated circuit (IC). In this context, the carrier 2 may be an IC chip, an ASIC chip, a multiplexer chip, an ion trap chip, another ion trap device, a photonics chip, an optics chip, etc. In a further example, the carrier 2 may include or may correspond to a printed circuit board (PCB). In yet a further example, the carrier 2 may include or may correspond to an interposer, which may e.g. be made of silicon and/or glass. For example, such interposer may be arranged between the substrate 6 and a chip or between the substrate 6 and a PCB.

The substrate 6 may include or may be made of a dielectric material or a semiconductor material. For example, the substrate 6 may include or may be fabricated from at least one of silicon, silicon carbide, silica, fused silica, sapphire, glass, borosilicate glass, alumina, amorphous Al₂O₃, aluminum nitride, diamond. In the illustrated example, the openings 12 extending through the substrate 6 may have the shape of a square or rectangle. In further examples, the openings 12 may also be of a different shape, for example round, circular, elliptical, etc. Note that in the exemplary top view of Figure 1, the mounting surface 4 of the carrier 2 may be seen through the openings 12 formed in the substrate 6.

The openings 12 may have been formed by locally removing material of the substrate 6 using a suitable technique, such as an etching technique. In one case, an opening 12 may be at least partially free of a solid material. For example, the opening 12 may be vacuum-filled, gas-filled or air-filled. In a further case, an opening 12 may be at least partially filled with a solid material. For example, the opening 12 may be filled with an encapsulation material configured to protect the electrical coupling elements 18 against external influences, such as humidity, contaminations, mechanical impact, etc. An encapsulation material may include at least one of a mold compound, an epoxy, an imide, a polymer, a glob-top material, etc. It is to be understood that not all of the openings 12 need to be filled with a same material, but may also be filled with different materials.

The device 100 may include different zones providing basic functionalities required for an operation of the ion trap. In the illustrated example, the device 100 may include at least one processing zone 32 which may correspond to a gate zone for performing quantum gate operations on ions trapped in the gate zone. It is to be understood that the device 100 may include various additional components which are not illustrated and described in detail for the sake of simplicity. For example, the device 100 may further include at least one of a memory zone, a state readout zone, a loading zone, a laser source, a microwave source, means for controlling voltages applied to the DC electrodes and/or RF electrodes, etc.

Referring now to Figure 2, a top view of a detail of a device 200 for controlling trapped ions in accordance with the disclosure is illustrated. The device 200 may include some or all features of the device 100 of Figure 1. A plurality of electrodes 16 may be arranged along the edge of an opening 12. In particular, the electrodes 16 arranged on a top surface 8 of a substrate 6 may correspond to DC electrodes. Possible RF electrodes and/or center DC electrodes of the device 200 are not shown for the sake of simplicity. The device 200 may include a plurality of electrical coupling elements 18 in form of wires. The wires 18 may electrically couple the DC electrodes 16 and electrical contacts 20 arranged on a mounting surface 4 of a carrier 2. In the illustrated example, the electrodes 16 may be directly connected to the electrical contacts 20 via the wires 18. That is, additional intervening elements (such as the electrical contacts 28 and electrical connection elements 30 of Figure 1) may be seen as optional and are not necessarily required.

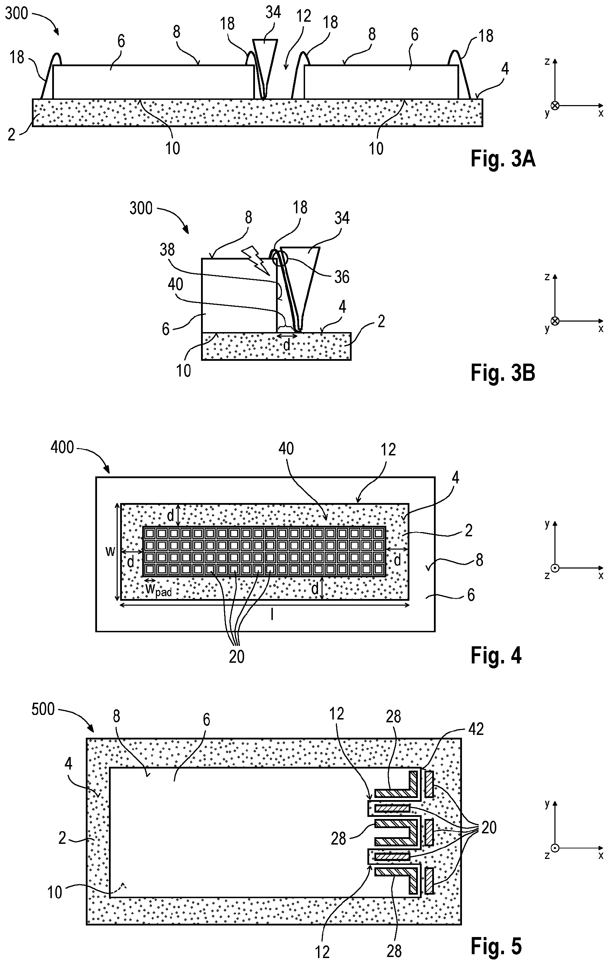

Referring now to Figures 3A and 3B, a side view of a device 300 for controlling trapped ions in accordance with the disclosure is illustrated. The device 300 may include some or all features of previously described devices. The device 300 may include electrical coupling elements 18 extending through an opening 12 of a substrate 6 for electrically coupling electrodes on a top surface 8 of the substrate 6 with first electrical contacts on a mounting surface 4 of a carrier 2. For the sake of simplicity, the electrodes and the first electrical contacts are not explicitly shown. In the illustrated example, the electrical coupling elements 18 may correspond to wires.

The electrical coupling elements 18 may be bonded to the electrodes and the first electrical contacts using a bonding tool 34 which may e.g. include a wire bond capillary. In order to avoid physical contact or a short circuit between a wire 18 and an edge of the substrate 6 (see region 36 in Figure 3B), the capillary 34 needs to be far enough away from a side wall 38 of the opening 12 during the bonding process. In one case, a minimum distance d between the side wall 38 and the tip of the capillary 34 when touching the mounting surface 4 may be about *2*·*w_{wire}+0.5*·*w_{capillary},* wherein *w_{wire}* is the width (or diameter) of the wire 18 and *w_{capillary}* is the width of the capillary 34. In a non-limiting example, the width *w_{wire}* of the wire 18 may be in a range from about 12.5um to about 25um, and the width *w_{capillary}* of the capillary 34 may be in a range from about 160µm to about 400um. As a result, the first electrical contacts on the mounting surface 4 may be spaced apart from the side wall 38 by the minimum distance d, which may result in an area (or keepout area) 40 of the mounting surface 4 surrounding the first electrical contacts. The size of the keepout area 40 may be chosen to allow access of the bonding tool 34 into the opening 12 for performing the bonding of the electrical coupling elements 18 to the first electrical contacts.

Referring now to Figures 4 to 10, exemplary implementations and layouts of openings formed in a substrate are shown and described. Each of the illustrated examples may include some or all features of previously described implementations. The illustrated examples may only show a detail of the respective ion trap device at times. It is to be understood that the presented implementations may be combined in various ways to provide further examples.

The device 400 for controlling trapped ions of Figure 4 may include an opening 12 extending through a substrate 6. In the exemplary top view of Figure 4, the opening 12 may be completely surrounded by the substrate 6. In other words, the outline (or contour) of the opening 12 may be completely arranged in the outline of the substrate 6. The opening 12 may have the shape of a rectangle, wherein a width *w* of the rectangle in the y-direction may be smaller than a length *l* of the rectangle in the x-direction. In particular, the length *l* may be more than about twice the width *w.* A minimum value of the width *w* may be about *2*·*d+n*·*w_{pad},* wherein *d* is the distance specifying the keepout area 40 (see also Figure 3), *w_{pad}* is the width of a first electrical contact 20, and *n* is the number of first electrical contacts 20 arranged next to each other in the y-direction.

In a non-limiting example, *n* may be in the order of a few and may e.g. have a value in a range from one to four. In the illustrated example, *n* may equal four, i.e. a maximum of four first electrical contacts 20 may be arranged next to each other in the y-direction. The value of n may be constant along the entire length of the arrangement of electrical contacts 20 in the x-direction. Accordingly, the plurality of electrical contacts 20 may essentially be arranged in form of a rectangle. Rectangular arrangements with constant n may provide the benefit of scaling the number of first electrical contacts 20 linearly with the area consumption of opening 12. In contrast, square arrangements at constant *n* may only increase the number of contacts proportional to the square root of the opening's area. In further examples, the number of contacts arranged next to each other in the y-direction may vary along the x-direction. That is, each other tightly packed (and possibly irregular) arrangement of the first electrical contacts 20 may be implemented as well.

The device 500 for controlling trapped ions of Figure 5 may include at least one opening 12 which may correspond to a recess extending into a side surface 42 of the substrate 6. That is, in the illustrated top view, an opening 12 of the device 500 does not necessarily have to be completely surrounded by the substrate 6. However, a recess extending into the side surface 42 of the substrate 6 may still form an opening extending from the top surface 8 to the bottom surface 10 of the substrate 6 similar to previous examples. In the illustrated example, the device 500 may include an exemplary number of two recesses 12 extending into the right side surface 42 of the substrate 6, thereby forming a comb-like structure at a periphery of the substrate 6.

The example of Figure 5 shows an exemplary arrangement of first electrical contacts 20 arranged on a mounting surface 4 of a carrier 2 and an exemplary arrangement of second electrical contact elements 28 arranged on a top surface 8 of the substrate 6. The first and second electrical contacts 20 and 28 are exemplarily illustrated as rectangular and/or L-shaped. In this regard, it is to be understood that each of the illustrated rectangles and/or L-shapes may include a plurality of electrical contacts as e.g. shown in the example of Figure 4. In the illustrated top view of Figure 5, the first electrical contacts 20 may be arranged adjacent to the right side surface 42 and in the recesses 12 of the substrate 6. The shown layout may result in additional wirebond area at the right edge of the substrate 6. It is to be noted that electrical coupling elements connecting the electrical contacts 20 and 28 as well as electrodes arranged over the substrate 6 are not illustrated for the sake of simplicity.

In the illustrated example, dimensions of the substrate 6 in the x- and y-direction may be about 10mm and about 5mm, respectively. The device 500 may be referred to as standard-size ion trap. A dimension of the recesses 12 in the x-direction may have a value in a range from about 1mm to about 2mm. However, the given values are in no way limiting and are only intended to give an impression of the size of the illustrated arrangement and its elements.

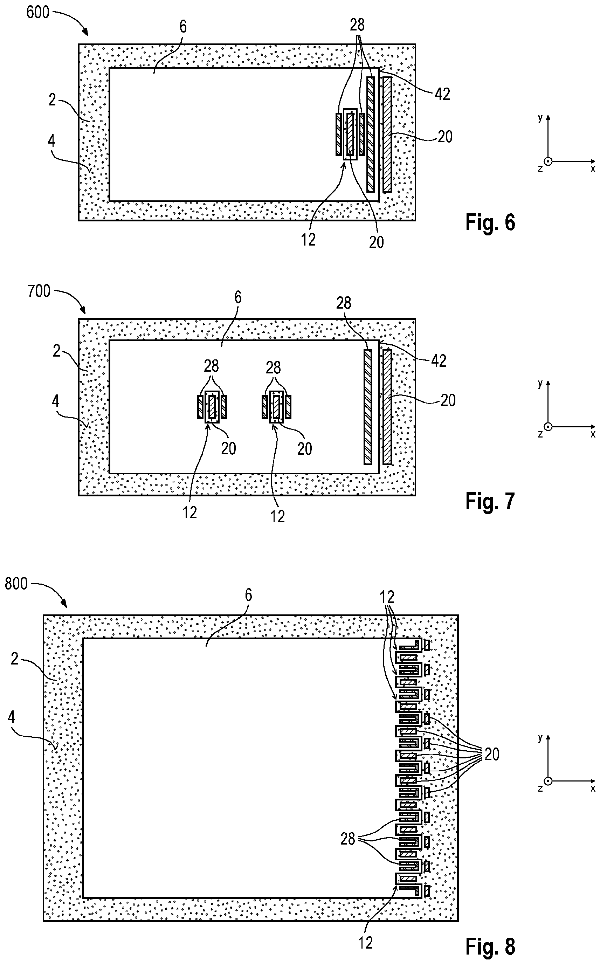

The device 600 for controlling trapped ions of Figure 6 may include some or all features of the device 500 of Figure 5. For example, the device 600 may correspond to a standard-size ion trap device. The device 600 may include one or multiple openings 12 that may be arranged close to the right side surface 42 of the substrate 6, but may be completely surrounded by the material of the substrate 6. The openings 12 may have the shape of a rectangle having an exemplary and non-limiting dimension of e.g. about 2mm in the y-direction. The first and second electrical contacts 20 and 28 may be grouped to form rectangles extending along the y-direction. Again, each of the illustrated rectangles may include a plurality of electrical contacts as already mentioned in connection with the example of Figure 5.

The device 700 for controlling trapped ions of Figure 7 may include some or all features of the devices 500 and 600 of Figures 5 and 6. For example, the device 700 may correspond to a standard-size ion trap device. The device 700 may include one or multiple openings 12 that may be arranged close to the center of the substrate 6. In a non-limiting example, a dimension of a rectangular opening 12 in the y-direction may be about 1.2mm each, but may differ in further examples.

The device 800 for controlling trapped ions of Figure 8 may be similar to the device 500 of Figure 5. Compared to Figure 5, the device 800 may include a larger number of recesses 12 extending into the side surface 42 of the substrate 6 and forming a comb-like structure. In the illustrated example, dimensions of the substrate 6 in the x- and y-direction may be about 25mm and about 20mm, respectively. The device 800 may be referred to as large ion trap. A dimension of the recesses 12 in the x-direction may have a value in a range from about 1mm to about 2mm, similar to the example of Figure 5. The given values are in no way limiting and are only intended to give an impression of the size of the illustrated arrangement and its elements.

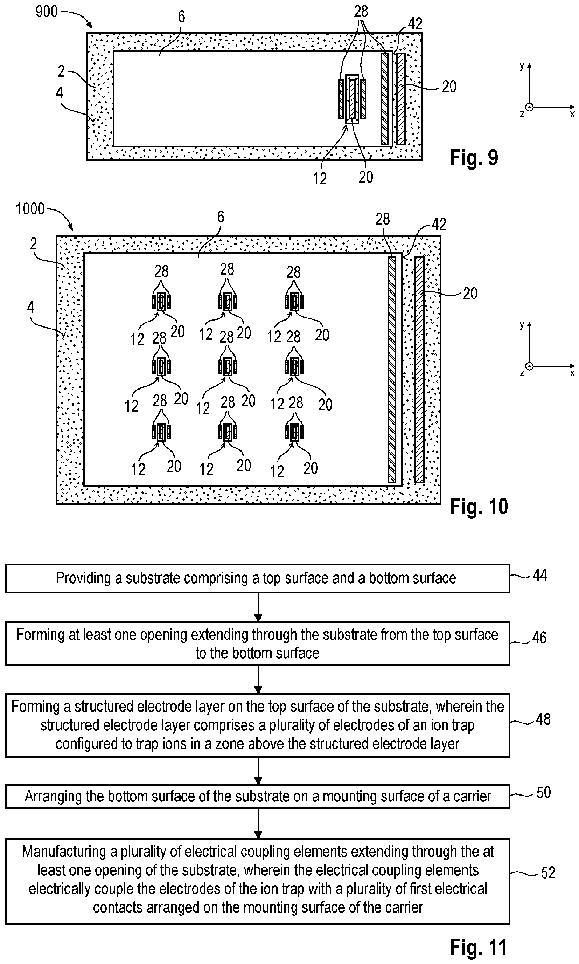

The device 900 for controlling trapped ions of Figure 9 may be similar to the device 600 of Figure 6. Compared to Figure 6, the device 900 may correspond to a large ion trap and may have different dimensions. The dimensions of the substrate 6 may be similar to the example of Figure 8. A dimension of the opening 12 in the y-direction may be about 4mm, but may differ in other implementations.

The device 1000 for controlling trapped ions of Figure 10 may be similar to the device 700 of Figure 7. Compared to Figure 7, the device 1000 may include a larger number of openings 12 arranged in the inner region of the substrate 6. In the illustrated example, the dimensions of the substrate 6 may be similar to the example of Figure 8, but may differ in other examples. The device 1000 may be referred to as large ion trap. In a non-limiting example, a dimension of the openings 12 in the y-direction may have a value of about 1.2mm.

Figure 11 illustrates a flowchart of a method for manufacturing a device for controlling trapped ions in accordance with the disclosure. The method may be used for manufacturing any of the previously described devices and may thus be read in connection with preceding figures. The method of Figure 11 is described in a general manner in order to qualitatively specify aspects of the disclosure. It is understood that the method may be extended by any of the aspects described in connection with other examples in accordance with the disclosure.

In an act 44, a substrate including a top surface and a bottom surface may be provided. In a further act 46, at least one opening extending through the substrate from the top surface to the bottom surface may be formed. In a further act 48, a structured electrode layer may be formed on the top surface of the substrate. The structured electrode layer may include a plurality of electrodes of an ion trap configured to trap ions in a zone above the structured electrode layer. In a further act 50, the bottom surface of the substrate may be arranged on a mounting surface of a carrier. In a further act 52, a plurality of electrical coupling elements extending through the at least one opening of the substrate may be manufactured. The electrical coupling elements may electrically couple the electrodes of the ion trap with a plurality of first electrical contacts arranged on the mounting surface of the carrier.

It is to be noted that one or more components of the devices described herein may be at least partially manufactured based on a micro-fabrication technique. For example, structured electrode layers as previously described may be formed based on a micro-fabrication technique. Micro-fabrication techniques (e.g. for electrode formation and structuring) may include one or more of photolithography processes (such as photoresist application, patterning, etching), deposition processes (such as CVD, PVD, sputtering), plating processes (such as electroless plating, galvanic plating), etching processes, or the like. Electrodes formed in a structured electrode layer may be structured with micrometer or sub-micrometer scale precision and alignment accuracy, thereby allowing complex electrode layouts without loss of controllability of trapped ions.

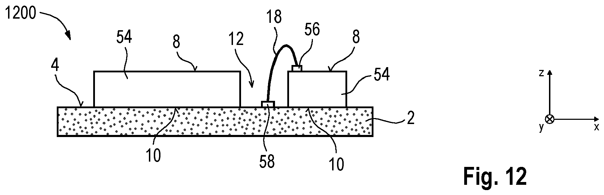

Referring now to Figure 12, a device 1200 in accordance with the disclosure is illustrated which may be seen as a more general version of previously described devices. The device 1200 may include some or all features of previously described devices. Preceding implementations may have referred in particular to ion trap devices including a substrate having an opening for electrical coupling elements. However, the previously presented concepts are not necessarily restricted to ion trap devices, but may also be applied to other devices as described in the following.

The device 1200 may include a carrier 2 having a mounting surface 4. The device 1200 may further include a semiconductor chip 54 having a top surface 8, a bottom surface 10 and an opening 12 extending through the semiconductor chip 54 from the top surface 8 to the bottom surface 10. The bottom surface 10 of the semiconductor chip 54 may be arranged on the mounting surface 4 of the carrier 2. An electrical contact 56 may be arranged on the top surface 8 of the semiconductor chip 54. The device 1200 may further include an electrical coupling element 18 extending through the opening 12 of the semiconductor chip 54 and electrically coupling the electrical contact 56 of the semiconductor chip 54 with an electrical contact 58 arranged on the mounting surface 4 of the carrier 2.

It will be understood that when an element is herein referred to as being "connected" or "coupled" to another element, it may be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between", "adjacent" versus "directly adjacent", etc.). In implementations described herein or shown in the drawings, any direct electrical connection or coupling, e.g., any connection or coupling without additional intervening elements, may also be implemented by an indirect connection or coupling, e.g., a connection or coupling with one or more additional intervening elements, or vice versa, as long as the general purpose of the connection or coupling, for example, to transmit a certain kind of signal or to transmit a certain kind of information, is essentially maintained.

### Examples

In the following, devices for controlling trapped ions and methods for manufacturing such devices are described by means of examples.

Example 1 is a device for controlling trapped ions, the device comprising: a carrier comprising a mounting surface; a substrate comprising a top surface, a bottom surface and at least one opening extending through the substrate from the top surface to the bottom surface, wherein the bottom surface of the substrate is arranged on the mounting surface of the carrier; a structured electrode layer arranged on the top surface of the substrate, wherein the structured electrode layer forms a plurality of electrodes of an ion trap configured to trap ions in a zone above the structured electrode layer; and a plurality of electrical coupling elements extending through the at least one opening of the substrate, wherein the electrical coupling elements electrically couple the electrodes of the ion trap with a plurality of first electrical contacts arranged on the mounting surface of the carrier.

Example 2 is a device according to Example 1, wherein the electrical coupling elements comprise at least one of a wire or a ribbon.

Example 3 is a device according to Example 1 or 2, wherein the carrier comprises at least one of an IC chip, an ASIC chip, a multiplexer chip, an ion trap chip, a photonics chip, an optics chip, an interposer, a printed circuit board.

Example 4 is a device according to any of the preceding Examples, wherein the substrate is fabricated from at least one of silicon, silicon carbide, silica, fused silica, sapphire, glass, borosilicate glass, alumina, amorphous Al₂O₃, aluminum nitride, diamond.

Example 5 is a device according to any of the preceding Examples, wherein the electrodes of the ion trap comprise a plurality of DC electrodes arranged along a shuttling path of the ion trap.

Example 6 is a device according to any of the preceding Examples, wherein the at least one opening is completely surrounded by the substrate when viewed perpendicular to the top surface or the bottom surface of the substrate.

Example 7 is a device according to any of the preceding Examples, wherein the at least one opening comprises a recess extending into a side surface of the substrate.

Example 8 is a device according to any of the preceding Examples, wherein the at least one opening comprises a plurality of recesses extending into a side surface of the substrate, thereby forming a comb-like structure at a periphery of the substrate.

Example 9 is a device according to any of the preceding Examples, wherein at least one opening has the shape of a rectangle when viewed perpendicular to the top surface or the bottom surface of the substrate, and wherein a first side length of the rectangle in a first direction is smaller than a second side length of the rectangle in a second direction.

Example 10 is a device according to Example 9, wherein a maximum of four first electrical contacts are arranged next to each other in the first direction.

Example 11 is a device according to any of the preceding Examples, wherein the first electrical contacts are spaced apart from a side wall of the at least one opening by an area of the mounting surface surrounding the first electrical contacts.

Example 12 is a device according to Example 11, wherein the size of the area allows access of a bonding tool into the opening for performing a bonding of the electrical coupling elements to the first electrical contacts on the mounting surface by the bonding tool.

Example 13 is a device according to any of the preceding Examples, further comprising: a plurality of second electrical contacts arranged on the top surface of the substrate at an edge of the at least one opening, wherein each of the plurality of electrical coupling elements is electrically coupled to a respective one of the plurality of second electrical contacts, and wherein the second electrical contacts are electrically coupled to the electrodes of the ion trap.

Example 14 is a method for manufacturing a device for controlling trapped ions, the method comprising: providing a substrate comprising a top surface and a bottom surface; forming at least one opening extending through the substrate from the top surface to the bottom surface; forming a structured electrode layer on the top surface of the substrate, wherein the structured electrode layer comprises a plurality of electrodes of an ion trap configured to trap ions in a zone above the structured electrode layer; arranging the bottom surface of the substrate on a mounting surface of a carrier; and manufacturing a plurality of electrical coupling elements extending through the at least one opening of the substrate, wherein the electrical coupling elements electrically couple the electrodes of the ion trap with a plurality of first electrical contacts arranged on the mounting surface of the carrier.

Example 15 is a device, comprising: a carrier comprising a mounting surface; a semiconductor chip comprising a top surface, a bottom surface and an opening extending through the semiconductor chip from the top surface to the bottom surface, wherein the bottom surface of the semiconductor chip is arranged on the mounting surface of the carrier; an electrical contact arranged on the top surface of the semiconductor chip; and an electrical coupling element extending through the opening of the semiconductor chip and electrically coupling the electrical contact of the semiconductor chip with an electrical contact arranged on the mounting surface of the carrier.

The features of the various examples described herein may be combined with each other unless specifically noted otherwise. Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

## Claims

1. A device for controlling trapped ions, the device comprising:
a carrier (2) comprising a mounting surface (4);
a substrate (6) comprising a top surface (8), a bottom surface (10) and at least one opening (12) extending through the substrate (6) from the top surface (8) to the bottom surface (10), wherein the bottom surface (10) of the substrate (6) is arranged on the mounting surface (4) of the carrier (2);
a structured electrode layer (14) arranged on the top surface (8) of the substrate (6), wherein the structured electrode layer (14) forms a plurality of electrodes (16) of an ion trap configured to trap ions in a zone above the structured electrode layer (14); and
a plurality of electrical coupling elements (18) extending through the at least one opening (12) of the substrate (6), wherein the electrical coupling elements (18) electrically couple the electrodes (16) of the ion trap with a plurality of first electrical contacts (20) arranged on the mounting surface (4) of the carrier (2).

2. The device of claim 1, wherein the electrical coupling elements (18) comprise at least one of a wire or a ribbon.

3. The device of claim 1 or 2, wherein the carrier (2) comprises at least one of an IC chip, an ASIC chip, a multiplexer chip, an ion trap chip, a photonics chip, an optics chip, an interposer, a printed circuit board.

4. The device of any of the preceding claims, wherein the substrate (6) is fabricated from at least one of silicon, silicon carbide, silica, fused silica, sapphire, glass, borosilicate glass, alumina, amorphous Al₂O₃, aluminum nitride, diamond.

5. The device of any of the preceding claims, wherein the electrodes (16) of the ion trap comprise a plurality of DC electrodes arranged along a shuttling path (22) of the ion trap.

6. The device of any of the preceding claims, wherein the at least one opening (12) is completely surrounded by the substrate (6) when viewed perpendicular to the top surface (8) or the bottom surface (10) of the substrate (6).

7. The device of any of the preceding claims, wherein the at least one opening (12) comprises a recess extending into a side surface (42) of the substrate (6).

8. The device of any of the preceding claims, wherein the at least one opening (12) comprises a plurality of recesses extending into a side surface (42) of the substrate (6), thereby forming a comb-like structure at a periphery of the substrate (6).

9. The device of any of the preceding claims, wherein at least one opening (12) has the shape of a rectangle when viewed perpendicular to the top surface (8) or the bottom surface (10) of the substrate (6), and wherein a first side length of the rectangle in a first direction is smaller than a second side length of the rectangle in a second direction.

10. The device of claim 9, wherein a maximum of four first electrical contacts (20) are arranged next to each other in the first direction.

11. The device of any of the preceding claims, wherein the first electrical contacts (20) are spaced apart from a side wall (38) of the at least one opening (12) by an area (40) of the mounting surface (4) surrounding the first electrical contacts (20).

12. The device of claim 11, wherein the size of the area (40) allows access of a bonding tool (34) into the opening (12) for performing a bonding of the electrical coupling elements (18) to the first electrical contacts (20) on the mounting surface (4) by the bonding tool (34).

13. The device of any of the preceding claims, further comprising:
a plurality of second electrical contacts (28) arranged on the top surface (8) of the substrate (6) at an edge of the at least one opening (12), wherein each of the plurality of electrical coupling elements (18) is electrically coupled to a respective one of the plurality of second electrical contacts (28), and wherein the second electrical contacts (28) are electrically coupled to the electrodes (16) of the ion trap.

14. A method for manufacturing a device for controlling trapped ions, the method comprising:
providing a substrate (6) comprising a top surface (8) and a bottom surface (10);
forming at least one opening (12) extending through the substrate (6) from the top surface (8) to the bottom surface (10) ;
forming a structured electrode layer (14) on the top surface (8) of the substrate (6), wherein the structured electrode layer (14) comprises a plurality of electrodes (16) of an ion trap configured to trap ions in a zone above the structured electrode layer (14);
arranging the bottom surface (10) of the substrate (6) on a mounting surface (4) of a carrier (2); and
manufacturing a plurality of electrical coupling elements (18) extending through the at least one opening (12) of the substrate (6), wherein the electrical coupling elements (18) electrically couple the electrodes (16) of the ion trap with a plurality of first electrical contacts (20) arranged on the mounting surface (4) of the carrier (2).

15. A device, comprising:
a carrier (2) comprising a mounting surface (4);
a semiconductor chip (54) comprising a top surface (8), a bottom surface (10) and an opening (12) extending through the semiconductor chip (54) from the top surface (8) to the bottom surface (10), wherein the bottom surface (10) of the semiconductor chip (54) is arranged on the mounting surface (4) of the carrier (2);
an electrical contact (56) arranged on the top surface (8) of the semiconductor chip (54); and
an electrical coupling element (18) extending through the opening (12) of the semiconductor chip (54) and electrically coupling the electrical contact (56) of the semiconductor chip (54) with an electrical contact (58) arranged on the mounting surface (4) of the carrier (2).
